# EUROPEAN PATENT APPLICATION

(11) **EP 4 578 966 A1**
(43) Date of publication of application: **02.07.2025**
(21) Application number: 23857440.4
(22) Date of filing: 25.08.2023
(51) Int. Cl.: C22B 7/04, C22B 9/10, C22B 59/00, C21B 3/06

(54) **IRON AND STEEL SLAG MODIFICATION METHOD AND IRON AND STEEL SLAG**

(30) Priority: 26.08.2022 JP 2022135136
(71) Applicant: NIPPON STEEL CORPORATION, Chiyoda-ku Tokyo 100-8071 (JP)
(72) Inventor: HIRATA, Junichi, Tokyo 100-8071 (JP); KOIZUMI, Shohei, Tokyo 100-8071 (JP); KOBAYASHI, Hajime, Tokyo 100-8071 (JP); MURAO, Reiko, Tokyo 100-8071 (JP); ISHIKAWA, Kyohei, Tokyo 100-8071 (JP); AIMOTO, Michihiro, Tokyo 100-8071 (JP)
(74) Representative: Vossius & Partner Patentanwälte Rechtsanwälte mbB
(86) International application number: PCT/JP2023/030721
(87) International publication number: WO 2024/043332

(57) **Abstract**

An iron and steel slag reforming method enabling iron and steel slag to be reformed so as to include a phase in which rare earth elements are concentrated in a specific mineral phase in iron and steel slag at the time of recovery of rare earth elements in iron and steel slag, that is, a rare earth element-enriched phase, and iron and steel slag having a rare earth element-enriched phase, that is, an iron and steel slag reforming method comprising a step of melting iron and steel slag containing rare earth elements and a step of adding a phosphate to the iron and steel slag and iron and steel slag having a rare earth element-enriched phase.

## Description

### FIELD

The present invention relates to an iron and steel slag reforming method, typically relates to a method for reforming slag containing a phase having rare earth elements in high concentrations (also referred to as an "REM-enriched phase") including a step of melting iron and steel slag containing rare earth elements and a step of adding a phosphate and relates to iron and steel slag.

### BACKGROUND

Rare earth elements are also referred to as "REM" (rare earth metals). This is the general name for the total 17 elements of Sc, Y, La, Ce, Pr, Nd, Pm, Sm, Eu, Gd, Tb, Dy, Ho, Er, Tm, Yb, Lu. Rare earth elements are being utilized as materials added to hydrogen storage alloys, secondary battery materials, optical glass, rare earth magnets, phosphors, polishing agents, aluminum alloys, and other various materials and are a group of elements with high industrial value. However, the regions in which ores of rare earth elements are to be found are limited. The ores are highly rare, so the worldwide supply is limited and, further, wildly fluctuate in price due to changes in the political environment. Therefore, establishment of a method for stably supplying large amounts of rare earth elements is important for industrial development.

For this reason, techniques for recovering rare earth elements from material containing rare earth elements are being developed and improved on in various sectors.

PTLs 1 and 2 relate to methods for recovering rare earth elements from materials containing rare earths such as motors using rare earth magnets and study methods for easy and efficient recovery of rare earth elements.

PTL 1 specifically proposes to add a melting point lowering agent, oxidizer, and sodium borate to a discarded product or semifinished product containing rare earth magnets and steel materials, heating them to melt, and separating them for recovery into the two phases of a rare earth-enriched phase in which the rare earth elements in the discard are concentrated in the sodium borate and an Fe-C phase.

PTL 2 proposes a method including a step of heating an object containing rare earth elements to melt, a step of adding an oxidizer to the melt after heating to melt, a step of adding B₂O₃ to the melt, and a step of cooling the melt to separate it into the three phases of a B₂O₃ phase, rare earth-enriched phase, and Fe-containing phase and taking out the rare earth-enriched phase.

### [CITATIONS LIST]

### [PATENT LITERATURE]

[PTL 1] Japanese Unexamined Patent Publication No. 2016-186121
[PTL 2] Japanese Unexamined Patent Publication No. 2016-186122

### [NONPATENT LITERATURE]

[NPL 1] Yasutaka Ta, "Crystallization Behavior of Slag in Blast Furnace Slag Continuous Solidification Process", Tetsu to Hagane, Japan, the Iron and Steel Institute of Japan, July 19, 2018, vol. 104, no. 11, p. 708 to 716
[NPL 2] Kazuo Fujita et al., "Thoroughly Easy Book on Rare Earths", first edition, Japan, Nikkan Kogyo Shinbunsha, August 30, 2012, p. 12 to 13.

### SUMMARY

### [TECHNICAL PROBLEM]

As explained above, technology for recovering rare earth elements from objects containing rare earth elements is being developed and improved on in various sectors.

In this regard, the amount of production of ferrous metals accounts for the majority of the overall amount of production of metals. The amount of production of iron and steel slag produced as a byproduct is also extremely great. For example, in Japan, about 100,000,000 tons or more of crude steel is being produced annually. As byproduct, blast furnace slag is being produced in 23,000,000 tons a year, steelmaking slag in 12,000,000 tons a year, and electric arc furnace slag in about 3,000,000 tons a year. The ferrous metal ore, coal, and limestone of the materials forming these iron and steel slag and iron scrap contain trace amounts of rare earth elements. After the ironmaking process, iron and steel slag also contains trace amounts of rare earth elements. If able to recover the rare earth elements from the iron and steel slag produced in such large amounts as byproduct, large amounts of rare earth elements could be recovered. This would be preferred.

PTLs 1 and 2 try to recover rare earth elements from objects containing rare earth elements which contain relatively large amounts of the rare earth elements, such as motors in which rare earth magnets are used. On the other hand, iron and steel slag is mainly comprised of lime (CaO) and silica (SiO₂) etc. There was the problem that even if applying the techniques of PTLs 1 and 2 as is, rare earth elements could not be sufficiently recovered.

Further, PTLs 1 and 2 propose to melt objects containing rare earth elements to form a rare earth element-enriched phase and an Fe-containing phase (in PTL 2, further a B₂O₃ phase) and to recover the rare earth element-enriched phase in order to efficiently recover rare earth elements. However, iron and steel slag generally has an iron content of less than 10 mass%, so in that point as well, it is not possible to apply the arts of PTLs 1 and 2 as is.

As explained above, iron and steel slag is mainly comprised of (CaO) and silica (SiO₂) etc. More particularly, the main constituents of iron and steel slag are silicon (Si), iron (Fe), aluminum (Al), magnesium (Mg), calcium (Ca), etc. It is necessary to construct a process enabling these constituent elements to be separated from the rare earth elements to recover the rare earth elements.

In addition, to recover rare earth elements in a high purity, generally wet refining is utilized. In general, wet refining includes a step of pretreating the material containing the rare earth elements, a step of leaching out, separating, and precipitating the phase containing the rare earth elements, a step of roasting the precipitate containing the rare earth elements and reducing it to the rare earth elements, etc. The higher the concentration of rare earth elements of the material containing the rare earth elements charged in the pretreatment stage, the higher the efficiency of the refining process. The higher the concentration of rare earth elements, the less the required amount of charging of the material to be charged in the wet refining process and the smaller the amount of chemicals used and scale of facilities, so the lower the cost at which operations can be performed. Further, if there is a phase in which the rare earth elements are enriched in a specific mineral phase in the iron and steel slag, it is possible to extract that phase and obtain a material with a high concentration of rare earth elements.

The present invention has as its object to provide an iron and steel slag reforming method enabling iron and steel slag to be reformed so as to include a phase in which rare earth elements are concentrated in a specific mineral phase in iron and steel slag at the time of recovery of rare earth elements in iron and steel slag, that is, a rare earth element-enriched phase, and iron and steel slag having a rare earth element-enriched phase.

### [SOLUTION TO PROBLEM]

The inventors engaged in repeated intensive research for solving the above problem. As a result, they found that the rare earth elements contained in iron and steel slag are present substantially uniformly dispersed sparsely (at low concentration) in the slag as a whole, but that by mixing a predetermined amount of phosphate into the slag in the molten state, a mineral phase mainly comprised of phosphate is formed and that mineral phase contains enriched rare earth elements. Note that, in the field of geosciences dealing with rare earth elements, it had been known that minerals in which rare earth elements are contained are produced as phosphates in addition to carbonates, oxides, clay, etc. However, the fact that in iron and steel slag, which contains CaO etc. in tens of mass%, typically 30 mass% or more, rare earth elements are enriched in the phosphate-based mineral phase is a completely new finding. Based on these findings, they completed the present invention enabling rare earth elements present sparsely in slag to be concentrated in a specific mineral phase in the slag.

(1) An iron and steel slag reforming method comprising
   a step of melting iron and steel slag containing rare earth elements and
   a step of adding a phosphate to the iron and steel slag.
(2) The iron and steel slag reforming method according to (1), adding the phosphate to the ferrous slab while melting.
(3) The iron and steel slag reforming method according to (1) or (2), wherein the step of adding the phosphate is included in the ironmaking process.
(4) The iron and steel slag reforming method according to (3), wherein the step of adding the phosphate is included in a deslagging step of the ironmaking process.
(5) The iron and steel slag reforming method according to any one of (1) to (4), comprising
   a step of adding the phosphate to the iron and steel slag and
   a step of heating the iron and steel slag and phosphate to melt after the step of addition.
(6) The iron and steel slag reforming method according to (5) wherein the step of heating to melt is included in the ironmaking process.
(7) The iron and steel slag reforming method according to any one of (1) to (5), further comprising a step of mixing the iron and steel slag and phosphate after the step of adding the phosphate.
(8) The iron and steel slag reforming method according to any one of (1) to (7), where the phosphate is calcium phosphate.
(9) The iron and steel slag reforming method according to any one of (1) to (8), wherein the iron and steel slag is blast furnace slag.
(10) Iron and steel slag having a phase containing one or more elements from among Sc, Y, La, Ce, Pr, Nd, Pm, Sm, Eu, Gd, Tb, Dy, Ho, Er, Tm, Yb, and Lu in 0.90 mass% or more and P in 0.04 mass% or more.
(11) The iron and steel slag according to (10) having a phase containing La in 0.90 mass% or more and P in 0.04 mass% or more.
(12) The iron and steel slag according to (10) or (11) reformed by a method according to any one of (1) to (9).

### [ADVANTAGEOUS EFFECTS OF INVENTION]

According to the present invention, an iron and steel slag reforming method enabling iron and steel slag to be reformed so as to include a phase in which rare earth elements are enriched in a specific mineral phase in iron and steel slag at the time of recovery of rare earth elements in iron and steel slag, that is, a rare earth element-enriched phase, can be provided. In other words, a method for producing reformed iron and steel slag is provided. Further, iron and steel slag containing a rare earth element-enriched phase is also provided.

The reformed iron and steel slag contains a rare earth element-enriched phase. The rare earth element-enriched phase can be extracted from this iron and steel slag. Due to this, it is possible to obtain an extract containing the rare earth elements at a high concentration. Finally, to recover the rare earth elements, a wet refining process can be utilized, but in this case, the extract containing the rare earth elements in a high concentration becomes an optimal material for the wet refining process. The higher the concentration of rare earth elements in the material, the less the required amount of charging of the material to be charged in the wet refining process and the smaller the amount of chemicals used and scale of facilities, so the lower the cost at which operations can be performed.

Further, the iron and steel slag reforming method according to the present invention can be performed by just a relatively simple operation. Further, it can be easily incorporated in an existing ironmaking process. On this point as well, low cost operation is possible, so this is preferable.

### BRIEF DESCRIPTION OF DRAWINGS

FIG. 1 is a flow chart for explaining one example of a method of reforming iron and steel slag containing rare earth elements.
FIG. 2 is an image of general iron and steel slag (before reforming) by an optical microscope and a mapping image of lanthanum by an X-ray microscope.
FIG. 3 is an image of iron and steel slag (after reforming) according to one aspect of the present invention by an optical microscope and a mapping image of lanthanum by an X-ray microscope.
FIG. 4 a mapping image of lanthanum by an X-ray microscope of iron and steel slag used in the examples and comparative examples.

### DESCRIPTION OF EMBODIMENTS

Below, a specific embodiment of the present invention (below, referred to as "the present embodiment") will be explained in detail, but the present invention is not limited to the following embodiment in any way. Suitable changes can be made in working the present invention to an extent not changing its gist.

There are several definitions of the elements included in the term "rare earth elements", but the term rare earth elements (REM: rare earth metals) shown in the present disclosure is defined as the group of elements including the total 17 elements of the lanthanides (Ln) comprised of lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thurium (Tm), ytterbium (Yb), and lutetium (Lu) plus yttrium (Y) and scandium (Sc).

Iron and steel slag is produced as a byproduct in the process of production of ferrous metals and is generally roughly divided into blast furnace slag and steelmaking slag.

Blast furnace slag typically comprises the constituents other than iron contained in iron ore at blast furnaces producing molten pig iron and the limestone of the secondary materials and the ash in coke which are melted, separated, and recovered together.

Steelmaking slag typically is produced as a byproduct in the steelmaking process which adjusts the constituents from pig iron and scrap and produces "steel" excellent in toughness and workability. Slag produced from pig iron in converters is called "converter slag" while slag produced from scraps in the process of steelmaking in electric arc furnaces is referred to as "electric arc furnace" slag.

These iron and steel slags mainly comprise lime (CaO) and silica (SiO₂) and can contain as other constituents alumina (Al₂O₃), magnesium oxide (MgO), and small amounts of sulfur (S). Note that, due to the differences in the production process, in steelmaking slag, the content of iron oxide (FeO) is relatively large and sometimes is 10 mass% or more, but in blast furnace slag, the content of iron oxide (FeO) may generally be 10 mass% or less, 5 mass% or less, 3 mass% or less, or 1 mass% or less.

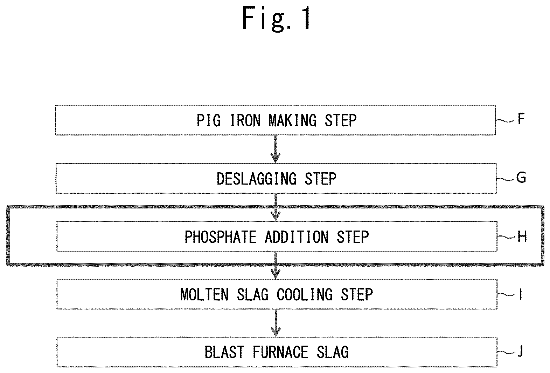

FIG. 1 is a flow chart for explaining illustratively a method of reforming iron and steel slag containing rare earth elements, in particular blast furnace slag. The general process for production of blast furnace slag includes adding coal, limestone, and iron ore to the top of the blast furnace and melting these materials at a high temperature while blowing in oxygen to form a melt (pig iron step F) and separating from the melt the heavy specific gravity pig iron and light specific gravity slag to eject the slag (deslagging step G). Phosphates are added to the deslaged molten state slag (phosphate addition step H). The slag is the molten state, so the phosphates added are dispersed in the slag. The slag is cooled along with time and changes to a solid state from the molten state (molten slag cooling step I). Here, the phosphate and rare earth elements dispersed in the slag agglomerate and solidify whereby a rare earth element-enriched phase is formed.

Here, the phosphate in the present embodiment is not particularly limited so long as having the property of agglomerating and solidifying with the rare earth elements. However, the phosphate is added to the slag and the slag is melted, so the phosphate preferably has a melting point equal to the slag. Typically, the phosphate may be tripotassium phosphate, tricalcium phosphate, magnesium diphosphate, trisodium phosphate, and mixtures of these. Note that, regarding calcium phosphate, Ca(H₂PO₄)₂, CaHPO₄, etc. break down by heat to form phosphate, so these may also be used.

Iron phosphate and hydrogen phosphates may also be used. However, these are generally low in melting point. If added to slag, they easily evaporate and the yield becomes lower. This point should be noted.

Further, the phosphate is not limited to pure forms of the phosphate. The phosphate may be contained in other substances. For example, it may be ores etc.

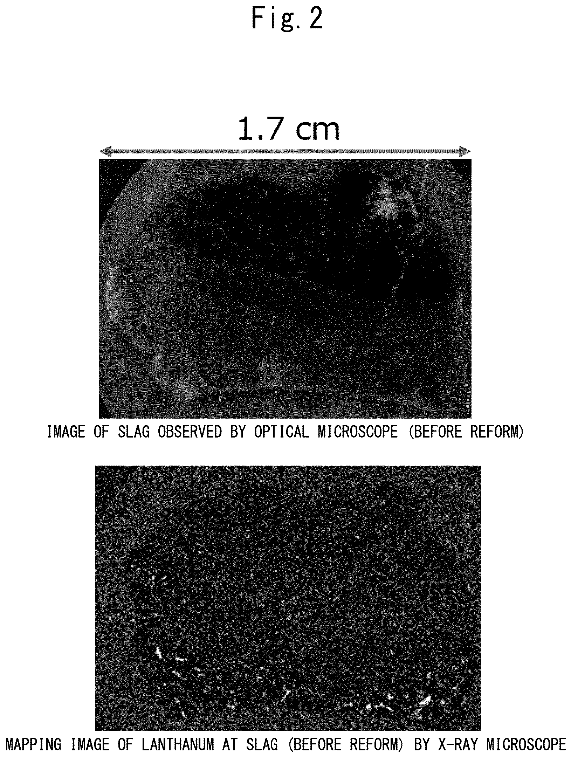

If there is no phosphate adding step H in the above flow (FIG. 1), that is, in the case of a general process for production of blast furnace slag, in the cooled and solidified blast furnace slag, rare earth elements are present dispersed in a substantially uniform sparse state. FIG. 2 is an image of such blast furnace slag observed by an optical microscope and a mapping image of lanthanum (La) by an X-ray microscope. If viewing the mapping image, substantially the entirety is black, but locations where lanthanum is present are mapped as fine white points. These fine white points are dispersed over the entirety of the mapping image and show that lanthanum is substantially evenly sparsely dispersed in the cooled and solidified blast furnace slag.

Note that, here, the lanthanum in the rare earth elements is covered by the mapping, but it is known that rare earth elements have similar properties with each other (NPL 2). Rare earth elements other than lanthanum (cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thurium (Tm), ytterbium (Yb), and lutetium (Lu) plus yttrium (Y) and scandium (Sc)) are dispersed substantially uniformly sparsely in the blast furnace slag in the same way as lanthanum (La).

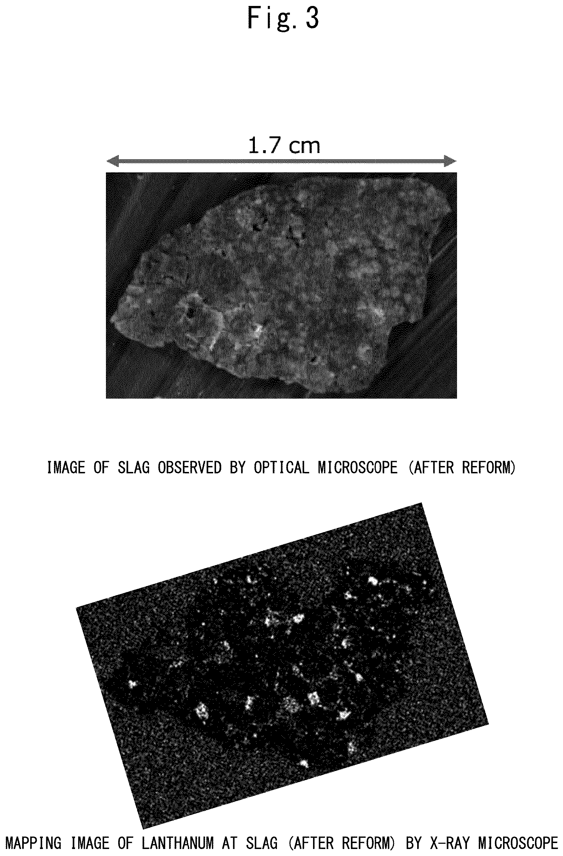

On the other hand, in the above flow (FIG. 1), the image of the blast furnace slag (J) if performing the phosphate adding step H, that is, reformed by the present embodiment, observed by an optical microscope and the mapping image of lanthanum (La) observed by an X-ray microscope are shown in FIG. 3. In FIG. 3, in the same way as FIG. 2, locations where lanthanum is present are mapped as white points, but the white points are shown larger than FIG. 2. This shows that lanthanum is present agglomerated, in other words, a phase in which lanthanum is enriched is present. Note that, a certain element being enriched means that the concentration in the enriched phase is higher than the concentration in locations in the slag other than the enriched phase. Lanthanum and other rare earth elements are originally low in concentration in general iron and steel slag as a whole and is generally 0.20% or less, so the concentration of the rare earth elements in the enriched phase may be more than 0.20 mass%. From the viewpoint of recovering rare earth elements, the higher the concentration of rare earth elements in the enriched phase, the more preferable. The concentration may be 0.30 mass% or more, 0.50 mass% or more, 0.70 mass% or more, 0.90 mass% or more, or 0.96 mass% or more.

Furthermore, if analyzing this agglomerated phase or enriched phase of lanthanum by X-ray diffraction, it is confirmed that this phase is a mineral phase comprised of phosphate. Due to this, while not desirable to be constrained by any specific theory, it is believed that by adding phosphate, the rare earth elements which had been uniformly sparsely present in the slag as a whole agglomerate and solidify with the phosphate whereby a rare earth element-enriched phase is formed. In general, in a rare earth element-enriched phase, that is, mineral phase, the concentration of P becomes higher in accordance with the amount of phosphate added. Typically, the concentration of P in that phase may be 0.04 mass% or more. The concentration of P in the rare earth element-enriched phase may be 0.10 mass% or more. Note that, the concentration of elements in the rare earth element-enriched phase in the present embodiment is measured assuming the measurement area (X-ray beam diameter) of the X-ray microscope (XGT-7200V made by Horiba Co., Ltd.) to be generally 100 µm. If the rare earth-enriched phase being measured is larger than the X-ray beam diameter, the measurement is conducted at least at three points or more in the phase and the measured concentrations are averaged. Note that, in the present embodiment, unless otherwise indicated, the concentration of elements in the rare earth element-enriched phase is quantitively analyzed using the fundamental parameter method. Further, in the fundamental parameter method, the iron oxide assumed is FeO.

Further, as explained above, rare earth elements have similar properties with each other, so in a phase in which lanthanum is enriched in blast furnace slag reformed by the present embodiment, rare earth elements other than lanthanum (cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thurium (Tm), ytterbium (Yb), and lutetium (Lu) plus yttrium (Y) and scandium (Sc)) are enriched in the same way as lanthanum (La).

In this way, the blast furnace slag reformed by the present embodiment contains a phase where lanthanum is enriched, that is, a phase where rare earth elements are enriched. After that, it is possible to extract the rare earth element-enriched phase from the blast furnace slag and run it through a wet refining process etc. to efficiently recover the rare earth elements.

As the technique of extracting the rare earth element-enriched phase from the blast furnace slag, known art can be used. As one example, the phosphate of the main constituent of the rare earth element-enriched phase and the silicate mineral contained in the blast furnace slag etc. differ in specific gravity and ease of dissolution in acid. For this reason, the known selective dissolution method, that is, the method of selectively dissolving the phosphate phase, can be used to selectively dissolve and extract only the rare earth element-enriched phase. Further, it is possible to crush the cooled and solidified iron and steel slag and separate it by specific gravity by a known method to extract only the phosphate phase, that is, rare earth element-enriched phase.

Note that, above, the explanation was given using the example of blast furnace slag in accordance with the flow of FIG. 1, but even with other iron and steel slag, that is, steelmaking slag or electric arc furnace slag, it is possible to add phosphate to reform slag having a rare earth element-enriched phase in the same way as the case of blast furnace slag.

Further, the amount of addition of phosphate is not particularly limited. However, if the amount of addition is too small, sometimes it is difficult to mix with the slag or the rare earth element-enriched phase is difficult to solidify. For this reason, the amount of addition of phosphate may be made 1.0 mass% or more, 2.0 mass% or more, 3.0 mass% or more, 4.0 mass% or more, 5.0 mass% or more, or 10.0 mass% or more with respect to the weight of the slag in accordance with the properties of the slag, the process conditions, etc. Further, if the amount of addition is too great, the effect of solidification of the rare earth element-enriched phase will become saturated, so the upper limit of the amount of addition may be made 20.0 mass% or less, 19.0 mass% or less, 18.0 mass% or less, 17.0 mass% or less, 16.0 mass% or less, or 15.0 mass% or less with respect to the weight of the slag.

Furthermore, the cooling speed when cooling the slag to solidify is not particularly limited. In general, when producing blast furnace water crushed slag, the critical cooling speed where the slag is glassified is several 100°C/s. As one example, it is possible to obtain crystalline slag when cooling by 100°C/s. However, part sometimes also becomes glassy. Therefore, the upper limit of the cooling speed may be 100°C/s or less or less than the same. Note that, NPL 1 discloses that when the cooling speed is 35°C/s or more, sometimes blast furnace slag becomes amorphous. Corresponding to this, the upper limit of the cooling speed may be made 35°C/s or less or less than the same. If the above cooling speed, the blast furnace slag becomes crystalline. The rare earth element-enriched phase can also be solidified. Further, if rapidly cooling the slag, the added phosphate is liable to not be sufficiently dispersed. For this reason, from the viewpoint of securing the time period for dispersion of the phosphate, the cooling speed may be lowered. The upper limit of the cooling speed may be 30°C/s or less, 25°C/s or less, or 20°C/s or less. On the other hand, the lower limit of the cooling speed is not particularly prescribed. The cooling speed may be set in a suitable range considering the capacity of the cooling facility and productivity. Typically, it is 0.1°C/min or more, 0.5°C/min or more, 1°C/min or more, 3°C/min or more, or 5°C/min or more.

Further, the temperature region for control of the cooling speed is not particularly limited, but it is sufficient that the slag be cooled until solidifying. Slag generally solidifies at 1000°C or so, so the cooling speed may be controlled in the temperature range from the temperature at which the slag melts to the slag temperature of 1000°C.

The iron and steel slag reforming method according to the present embodiment includes a step of melting iron and steel slag containing rare earth elements and a step of adding phosphate to the iron and steel slag, but here, the order of these steps in the time series is not an issue. Here, "melting" includes at least one of a solid being rendered a liquid or sometime rendered a liquid being kept a liquid. Therefore, it includes remelting solid state iron and steel slag containing rare earth elements. Further, it includes forming iron and steel slag containing rare earth elements in the ironmaking process, for example, pig iron making process, and holding the molten state iron and steel slag containing rare earth elements as is in the molten state.

A certain embodiment may include a step of adding the phosphate to the iron and steel slag after the step of melting the iron and steel slag. That is, in this embodiment, it is also possible to add the phosphate to the iron and steel slag in the molten state. When adding the phosphate, the iron and steel slag is already in the molten state, so the added phosphate is easily dispersed or mixed in the iron and steel slag. When the slag is cooled to solidify after that, the phosphate and rare earth elements dispersed in the slag agglomerate and solidify and a rare earth element-enriched phase is formed in the slag.

Another embodiment may include a step of melting the iron and steel slag after the step of adding the phosphate to the iron and steel slag. That is, in this embodiment, it is also possible to add the phosphate to the iron and steel slag before melting and then heat the iron and steel slag together with the phosphate to melt together. Along with the slag being melting, the phosphate is dispersed or mixed in the slag in the molten state. When the slag is cooled to solidify after that, the phosphate and rare earth elements dispersed in the slag agglomerate and solidify and a rare earth element-enriched phase is formed in the slag.

In one embodiment, the iron and steel slag and phosphate may be intentionally mixed. The method of mixing can use stirring or another known technique. Due to the mixing, dispersion of the phosphate in the iron and steel slag is promoted. Along with this, enrichment of the rare earth elements is promoted. The timing of mixing is not particularly limited so long as after the phosphate is added to the iron and steel slag. It may be before melting the slag, after melting the slag, or during melting the slag. The mixing may also be performed spanning several timings. Note that, if heating the iron and steel slag to melt together with the phosphate, it is preferable to perform the heating and melting after mixing the iron and steel slag and phosphate. This is because since the slag and phosphate are mixed, even while the slag is being melted, the part of the slag in the molten state easily contacts the phosphate and the dispersion of the phosphate is promoted. Further, it is preferable to add the phosphate to the iron and steel slag in the molten state. Due to this, mixture of the phosphate and iron and steel slag can be promoted.

Further, in one embodiment, the ironmaking process may include a step of adding or mixing in a phosphate. The "ironmaking process" is a method of producing iron. In the broad sense, it may include a pig iron making step of refining iron ore by reduction to make pig iron, a steelmaking step of refining the pig iron to make it steel, and a step of rolling and working the steel. Iron and steel slag is produced in the ironmaking process, so by incorporating the present embodiment in the ironmaking process, it is possible to efficiently perform the process as a whole (ironmaking process including iron and steel slag reforming process of present embodiment). In a general ironmaking process, a step of the iron and steel slag being heated and rendered a molten state is included. This step can overlap at least part of the step for melting the iron and steel slag of the present embodiment (be simultaneous with) and therefore reduce the cost entailed for heating and melting, so this is preferable.

Furthermore, the ironmaking process may include a step of heating the slag and phosphate to melt. That is, it is possible to heat and melt not only the slag, but also the phosphate simultaneously. It is possible to raise the efficiency of all processes including not only the ironmaking process, but also the slag reforming process, so this is preferable. As one example, if blast furnace slag, it is also possible operate the blast furnace while charging the phosphate at the top of the blast furnace together with the slag materials (limestone, silica, etc.)

In one embodiment, the deslagging step of the ironmaking process may also include a step of adding or mixing in phosphate. In the general ironmaking process, the step of ejecting the iron and steel slag (deslagging step) is included. Normally, in the deslagging step, the slag is in the molten state and the added phosphate is easily dispersed or mixed into the slag. Further, due to the ejection, the slag flows, so the dispersion or mixing of the added phosphate into the slag is further promoted.

In another embodiment, iron and steel slag having a phase containing one or more elements from among Sc, Y, La, Ce, Pr, Nd, Pm, Sm, Eu, Gd, Tb, Dy, Ho, Er, Tm, Yb, and Lu in 0.90 mass% or more P in 0.04 mass% or more, in particular iron and steel slag having a phase containing La in 0.90 mass% or more and P in 0.04 mass% or more, is provided. Typically, the composition of the iron and steel slag obtained by the iron and steel slag reforming method according to the above-mentioned embodiment can have a phase containing rare earth elements and P in the above concentrations. The iron and steel slag reforming method can be said to be a de facto method for producing reformed slag. That is, according to another embodiment, a method of production of reformed iron and steel slag is produced. The phase containing the rare earth elements and P in predetermined amounts is an enriched phase of the rare earth elements. By performing a wet refining process using that enriched phase etc., it is possible to efficiently recover rare earth elements. As one example of wet refining, an acid or alkali solution or other suitable solvent may be used to dissolve out the targeted rare earth elements from the enriched phase and the rare earth elements taken out chemically or electrochemically from that solution.

### EXAMPLES

Below, examples will be used to explain the present invention in further detail, but the present invention is not limited in any way by these descriptions.

As typical iron and steel slag, iron and steel slag of the composition shown in No. 1 of Table 1 (blast furnace slag) was prepared. The concentration of rare earth elements was not particularly adjusted and was made that originally contained in the No. 1 iron and steel slag as it was. The iron and steel slag having the composition of No. 1 was heated to 1400°C to render it a molten state, then calcium phosphate (Ca₃(PO₄)₂) was added as the phosphate by blowing it in. As shown in Table 1, in each of No. 2 to No. 4, calcium phosphate was added to plus 5.0 to 20.0 mass% (added amount) with respect to the weight of the molten slag (100.0 mass%) and was cooled to solidify to 1000°C by a 0.5°C/min cooling rate. The obtained slag composition was analyzed. The average composition of slag shown in Table 1 is the composition before addition of calcium phosphate and the average composition of elements in 1.0 g of iron and steel slag overall. In the present examples, the concentrations of elements were quantitatively analyzed by the fundamental parameter method based on results of measurement by an X-ray microscope.

**[Table 1]**

| Table 1. Amount of Addition of Calcium Phosphate and Average Composition of Iron and steel slag (mass %) | | | | | | | |
|---|---|---|---|---|---|---|---|
| Test no | Calcium phosphate | Average composition | | | | | |
| | Amount added | Si | Al | Fe | Ca | Mg | P |
| No. 1 (comparative example) | - | 16.8 | 9.0 | 0.21 | 30.7 | 3.6 | 0.01 |
| No. 2 | 5.0 | 16.0 | 8.6 | 0.20 | 31.1 | 3.4 | 0.96 |
| No. 3 | 10.0 | 15.3 | 8.2 | 0.19 | 31.5 | 3.1 | 2.7 |
| No. 4 | 20.0 | 14.0 | 7.5 | 0.17 | 32.1 | 2.6 | 5.6 |

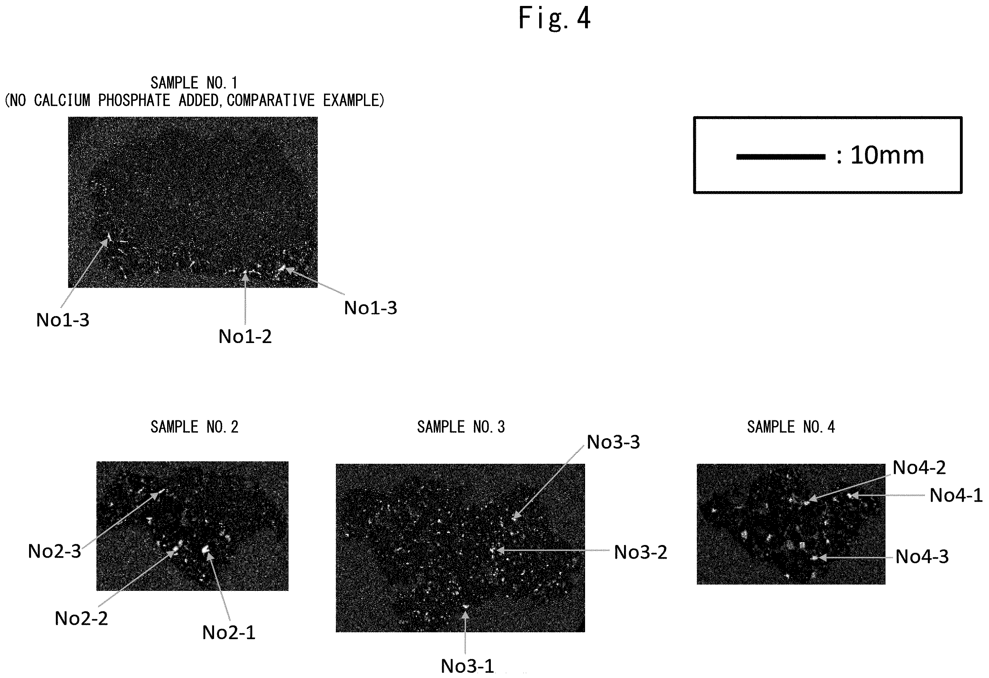

The image of the slag of No. 1 to No. 4 examined under an X-ray microscope is shown in FIG. 4. The slag was observed under conditions of a beam diameter of the X-rays of 100 µm. In the image of FIG. 4, there are white locations present. In particular, the location shown by the arrow mark in FIG. 4 was measured for concentrations of lanthanum (La) and phosphorus (P). The results are shown in Table 2.

**[Table 2]**

| Table 2. Results of Analysis of Lanthanum and Phosphorus in Rare Earth Element-Enriched Phase (mass %) | | | |
|---|---|---|---|
| Sample no. | Test no. | La | P |
| No. 1 (comparative example) | No. 1-1 | 0.16 | 0.00 |
| | No. 1-2 | 0.20 | 0.00 |
| | No. 1-3 | 0.09 | 0.00 |
| No. 2 | No. 2-1 | 0.96 | 0.04 |
| | No. 2-2 | 1.11 | 0.24 |
| | No. 2-3 | 1.22 | 0.10 |
| No. 3 | No. 3-1 | 1.31 | 2.90 |
| | No. 3-2 | 1.29 | 1.10 |
| | No. 3-3 | 1.49 | 2.19 |
| No. 4 | No. 4-1 | 1.47 | 5.95 |
| | No. 4-2 | 1.01 | 2.74 |
| | No. 4-3 | 1.28 | 3.02 |

As clear from the image of FIG. 4, in each of Sample No. 2 to No. 4 to which calcium phosphate was added, the area ratio of the white locations became greater. Further, as clear from Table 2, the concentrations of lanthanum (La) and phosphorus (P) at the white locations became higher than those of No. 1. From these, it was confirmed that in each of Sample No. 2 to No. 4, there was a rare earth element-enriched phase (white locations) present and that phase contained phosphate. Note that, in Table 2, the results of measurement of lanthanum as a rare earth element was used, but rare earth elements have similar properties with each other. At a rare earth element-enriched phase (white locations), rare earth elements other than lanthanum (lanthanides (Ln) comprising cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thurium (Tm), ytterbium (Yb), and lutetium (Lu) plus yttrium (Y) and scandium (Sc)) are enriched in the same way as lanthanum (La).

Separately, iron and steel slag of the composition shown in No. 1 of Table 1 (blast furnace slag) was heated to render it a molten state. To this, 5.0 mass% of external (added) calcium phosphate with respect to the weight of the molten slag (100.0 mass%) was added by blowing, then the result was cooled to solidify it by a cooling rate of 0.1 to 500°C/min in range. The obtained slag was investigated for the presence of a rare earth element-enriched phase by an X-ray microscope under conditions similar to the above. As a result, it was confirmed that with a cooling rate of 0.1°C/min to 500°C/min in range, in the same way as Nos. 2 to 4 of Table 1, an enriched phase of La and P was present.

### REFERENCE SIGNS LIST

F: pig iron making step by blast furnace process
G: step discharging slag from inside blast furnace
H: step adding phosphate to slag in molten state
I: step cooling slag in molten state to make it solidify
J: blast furnace slag suited for recovery of rare earth elements

## Claims

1. An iron and steel slag reforming method comprising
a step of melting iron and steel slag containing rare earth elements and
a step of adding a phosphate to the iron and steel slag.

2. The iron and steel slag reforming method according to claim 1, adding the phosphate to the ferrous slab while melting.

3. The iron and steel slag reforming method according to claim 1, wherein the step of adding the phosphate is included in the ironmaking process.

4. The iron and steel slag reforming method according to claim 3, wherein the step of adding the phosphate is included in a deslagging step of the ironmaking process.

5. The iron and steel slag reforming method according to claim 1, comprising
a step of adding the phosphate to the iron and steel slag and
a step of heating the iron and steel slag and phosphate to melt after the step of addition.

6. The iron and steel slag reforming method according to claim 5, wherein the step of heating to melt is included in the ironmaking process.

7. The iron and steel slag reforming method according to claim 1, further comprising a step of mixing the iron and steel slag and phosphate after the step of adding the phosphate.

8. The iron and steel slag reforming method according to claim 1, where the phosphate is calcium phosphate.

9. The iron and steel slag reforming method according to claim 1, wherein the iron and steel slag is blast furnace slag.

10. Iron and steel slag having a phase containing one or more elements from among Sc, Y, La, Ce, Pr, Nd, Pm, Sm, Eu, Gd, Tb, Dy, Ho, Er, Tm, Yb, and Lu in 0.90 mass% or more and P in 0.04 mass% or more.

11. The iron and steel slag according to claim 10 having a phase containing La in 0.90 mass% or more and P in 0.04 mass% or more.

12. The iron and steel slag according to claim 10 or 11 reformed by a method according to any one of claims 1 to 9
